# EUROPEAN PATENT APPLICATION

(11) **EP 3 412 759 A1**
(43) Date of publication of application: **12.12.2018**
(21) Application number: 18386014.7
(22) Date of filing: 21.05.2018
(51) Int. Cl.: C11B 9/02, B30B 9/02

(54) **BY ROAD MOVABLE FRUIT PEEL AND FLESH OIL EXTRACTION LABORATORY BY THE METHOD OF HYDRAULIC DIRECT COLD PRESS**

(30) Priority: 09.06.2017 GR 20170100261
(71) Applicant: Tzanakakis, Stylianos, 741 32 Rethymno Crete (GR)
(72) Inventor: Tzanakakis, Stylianos, 741 32 Rethymno Crete (GR)

(57) **Abstract**

By road movable fruit peel and flesh oil extraction laboratory by the method of hydraulic direct cold press.

This invention relates to a road movable complete fruit peel and flesh oil extraction laboratory by the method of hydraulic direct cold press, housed in a suitably designed metallic container. The laboratory will have roof openings, internally foldable door leaves, foldable tents and foldable floors and will be equipped according to Fig. 39 and Fig.40 with appropriately arranged electric and electric assisted machines (YΠ1/2, KΦΔEK, AE , AK, ΠK,TK), liquid tanks (DEEL, DKEL1 , DKEL2, DKEL3, DYOL, DEOL, DKOL) and pulp tanks (DPCE) able to (a) be transported and installed in the fields, fruit dumps and juicing factories (b) store daily produced oils and liquid waste (c) store the daily produced low oil content pulp (d) store daily produced fruit juice (e) use common machinery and common storage tanks for the oil extraction processes from fruits with oily peel and fruits with oily flesh (f) require for its operation only the connection of its Electrical Board (EP) to an external electric generator or a fixed electrical network (PPC) and (g) produce first cold pressed oils bypassing the malaxation phase of the flesh and minimizing the total oil extraction time.

## Description

This invention concerns a complete, by road movable , fruit peel and flesh oil extraction laboratory by the method of hydraulic direct cold press, whose machinery and equipment are appropriately arranged and housed in a specially designed metal container, able to be transported (self-moving or trailer) and be installed in the production fields of the processing organic matter.
Regarding the oil extraction of fruits, there exist several industrial and artisan processes on the market which use the screw compression method, however there are no hydraulic compression processes.

In the oil market for nutritional / cosmetic and pharmaceutical purposes is known the value of cold pressed oils where the processing temperature should be kept very low, since this low temperature ensures the maintenance of the qualitative substances of the oils that induce the nutritional / cosmetic and pharmaceutical value.
During the oil extraction processes, among others the problem of solid and liquid waste management must be faced. This need for the management of solid and liquid waste to be faced at the source, has become now imperative. Until recently, the liquid residues / wastes from the oil extraction processes were a fundamental management problem for local environmental authorities. Only recently has begun the change on the perception that liquid residues should cease to be treated as waste but as a source of super - valuable substances on the one hand for the field itself, since these substances are rich in nutrients, and on the other hand since they can be isolated and exploited with significant health, social, environmental and economic benefits. Also, to date, the management of the Washing and Cleansing Waters of the fruits at the beginning of the oil extraction processes included partial recycling during the washing phase and their disposal in the Municipal Drainage System.
The method of hydraulic direct cold press applied to the peel and the flesh of the fruit will be able to produce the highest quality oil while at the same time the liquid and solid waste from the processing can be disposed of in the production field of the raw material for the processes or in the fruit dumps (when the laboratory is installed in such places).

Today there are two basic methods of fruit oil extraction. For fruits such as avocados where the oils are found in the flesh of the fruit, the oil extraction process comprises the following steps: (a) Unloading the fruits (b) Checking of the fruits (c) Storage (d) Washing (e) Cutting to remove the kernel (f) Optional removal of the peel (g) malaxation of the flesh (h) Oil Extraction by using Decanter centrifugation (i) Filtration and (j) Storage. While for fruits such as citrus fruits where the oils are in the peel, the process of oil extraction is carried out either in parallel with the juicing process or separately. When the oil extraction is carried out in parallel with the juicing process, after the squeezing of the juicy fruit follows separation (usually by centrifugation) of the liquid phase in aqueous and oily , whereupon the oily phase passes through one or more refining (further centrifugation & filtration) stages depending on the use of the oils. However, when the oil extraction of the fruits with oily peel is not carried out simultaneously with the juicing process, in such cases the solid residues of juicing are usually left in a special place for natural drying followed by the screw compression process for the extraction of the oily phase.
The basic criteria of oil quality are the acidity, the oxidation, the hydrolysis, the color and the organoleptic characteristics (odor and taste). From these, the oxidation which also constitutes a fundamental qualitative characteristic for all oil applications, is mainly determined by the quality of the fruits during the oil extraction process, which quality of fruits is directly related to (a) the storage conditions with adequate ventilation and absence of lighting (b) the avoidance to damage the peel and (c) the minimization of the time between the harvesting and oil extraction phases (the minimization of which time is also one of the fundamental advantages of the invention)

Object of this invention is the design of a complete, movable by road (self-movable or trailer), oil extraction laboratory of any kind of oil peel and oily flesh of fruits using the hydraulic direct cold press method, where (a) both the produced oils and the liquid waste can be stored in tanks within the container and (b) both the hydraulic press and the other processing machines will be electrically assisted or electrically powered.

The intended purpose of the applicant for the above object of the invention is (a) the production of top quality vegetable oils under constantly lower temperatures than 27 ° C and (b) the rational treatment of the environmental problem, as it was considered until recently, of the management of solid and liquid waste / residues produced, on the one hand with direct disposal to the ground of solid and liquid residues and washing water and on the other hand with the possibility of storing the liquid residues for their transportation to valuable substances recovery units. The object of the invention is achieved by appropriately designing the set-up of the Machinery (Hydraulic Press / Separator / Washing Machine etc.) and the Equipment (Tanks etc.), which will be housed in a suitably designed metal container, with the possibility of road transport through a standard truck or trailer.

With respect to the stainless steel compression cylinder of the hydraulic press (YP), it will be either perforated or with vertical slots all over its surface. Depending on the maturity of the fruit, the oil content but also the dimensions of the holes, and in order to avoid the phenomenon of pulping, it will depend (a) whether the fruits will be placed directly into the compression cylinder or (b) whether the fruits will be placed prior into a suitably made fabric sack (of food grade micro-filtration fabric type), which sack will then be placed inside the compression cylinder.

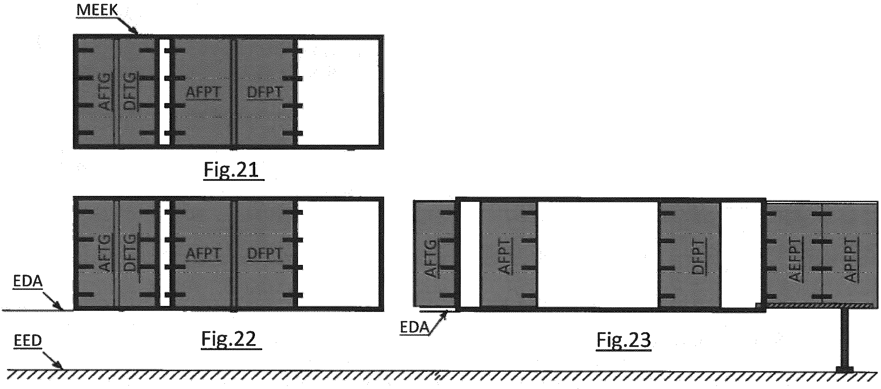

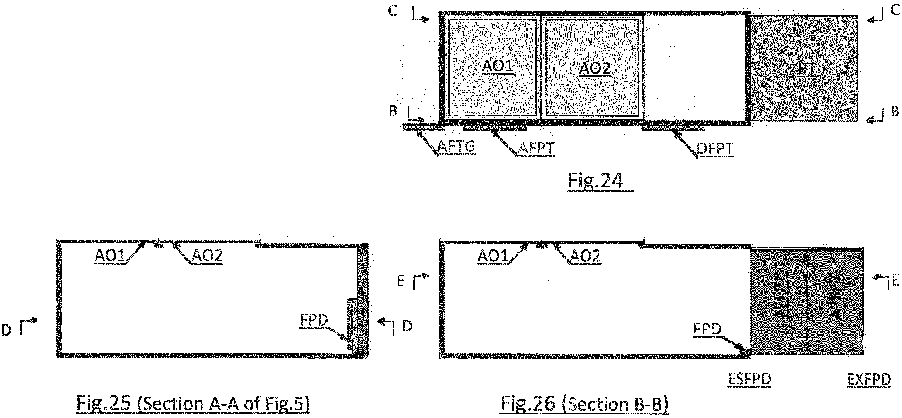

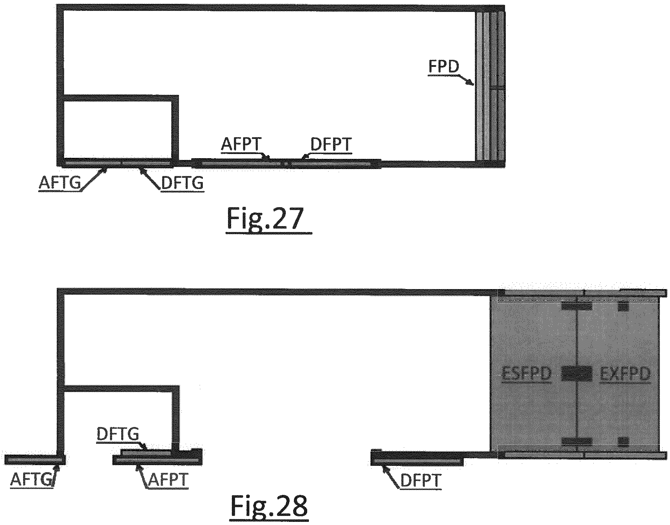

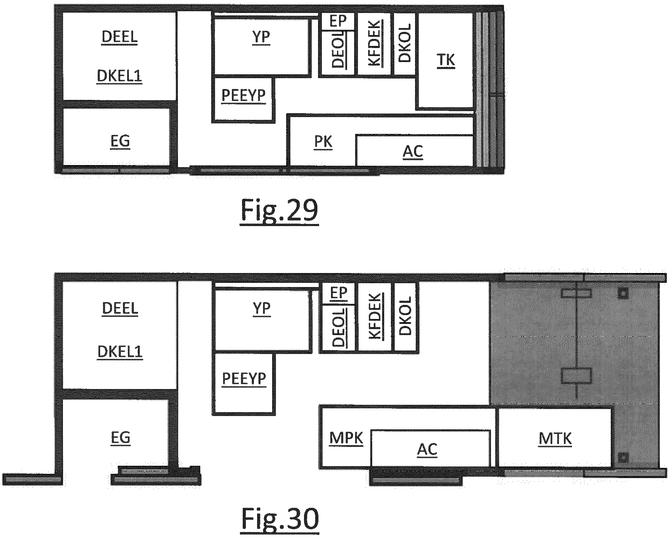

In a specific variant of the laboratory of the invention, it is possible to modify the container appropriately so that in the position of the two of four tanks to be installed an Electric Generator (with a special partition and additional side openings / doors) of appropriate capacity in accordance with the attached Fig. 21 to Fig. 30, with a daily fuel tank. This modification, while depriving part of the processing capacity (in terms of the ability to self-transport of the produced oils and liquid residues / wastes), nevertheless provides the movable laboratory with the ability to have housed the required electric generator (so that it is not transported by a separate wheeled vehicle). Of course, depending on the distance and the degree of the difficulty to access the movable laboratory into the raw material production field, will be assessed accordingly the possibility to choose a truck (of allowed length according to current road legislation).

Also, in a particular variation of the laboratory of the invention, the degree of separation of the produced oils and liquid residues may be varied based on the design of the dimensions and number of the storage tanks. The degree of separation will depend on the geographical area of activity of the laboratory of the invention, as in case of operating in areas with small lots there will be the need to separate the oils and liquid residues produced daily from different fields or even from the same in case the variety of trees is different.

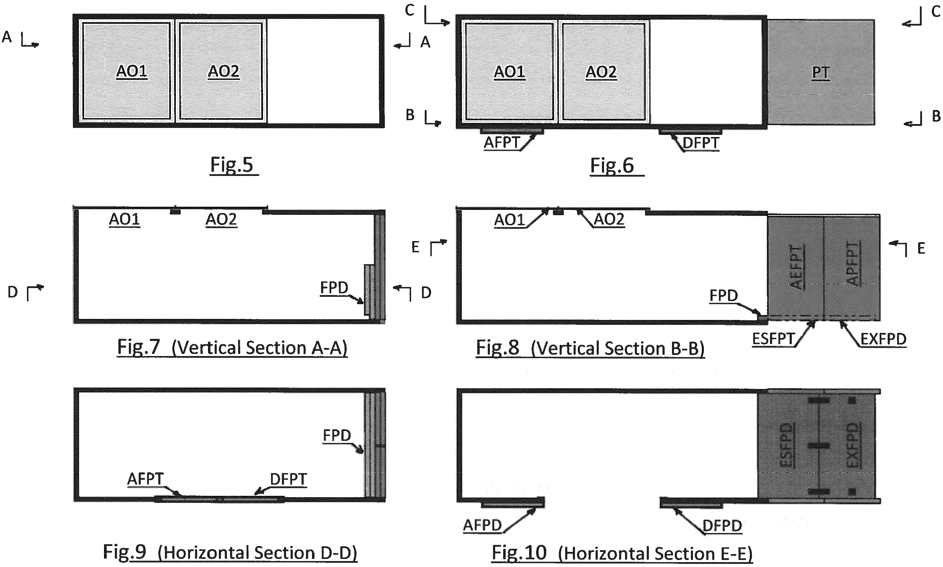

Also, in a specific variation of the laboratory of the invention and in accordance with the attached drawings Fig. 6 to Fig. 10, the number of foldable floor panels and of foldable door panels/leafs of the rear double-leaf door may vary, depending on the size of the extended foldable processing space of raw material, desired to be created. For example, the foldable floor may consist of a total of three panels and each side of the rear double-leaf door may have two inner foldable panels/leafs , but in the processing area may have been selected to open / expand only the two floor panels and one inner door panel.

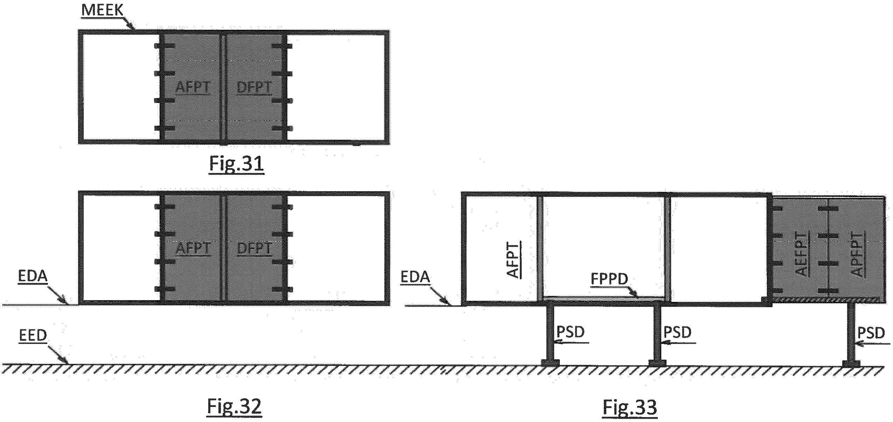

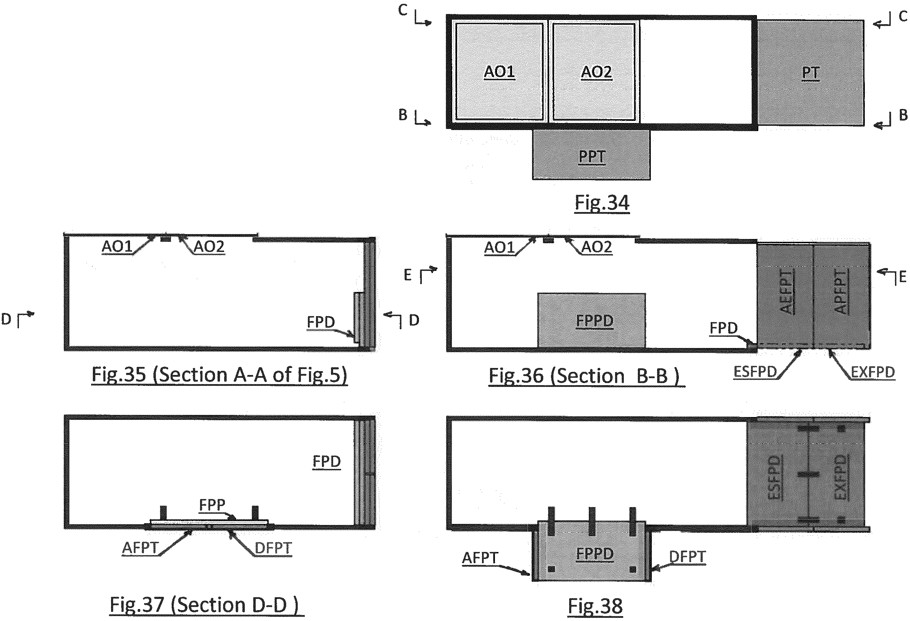

Also in a particular variant of the laboratory of the invention can be added a foldable extending floor and inner foldable leafs/panels of the side double-leaf door, in accordance with the attached drawings Fig. 33 to Fig. 38. The purpose of this variation will be to capability to have (when needed) a foldable covered area in front of the side double-leaf door, in order to facilitate the process of multiple (1^{st} stage / 2^{nd} stage etc.) compressions (by creating a solid residue deposit for further processing) and to prevent rain water entering into the main processing area (Hydraulic Press YP room) during days of heavy rainfall.

Also, in a particular variation of the laboratory of the invention, a foldable electric winch can be added whose arm will suitably be supported on the roof of the rear door, and with its extension, will be assisted the loading of the raw material to the level of the side folding floor.

Also in a particular variation of the laboratory of the invention, one or more of the tanks may be cooled, in the case of storage of the juice produced during the oil extraction from fruits with oily peel, in order for the juice to be transferred to juice production plants, avoiding decay of its qualitative characteristics.

Also, in a particular variation of the laboratory of the invention, there is the possibility for the laboratory to be equipped with a heat pump to continuously maintain the temperature of the process area and the stored oils and liquid residues at levels below 27 °C.

Also, in a particular variation of the laboratory of the invention, it is possible for the laboratory to be equipped with a second hydraulic press with also having a stainless steel compression cylinder with slots or holes of suitable dimensions so that the solid residue (SYS) of the direct compression of the fruits with oily flesh may be compressed further for the production of low-oil content pulp. In this case, the laboratory will also be equipped with a special low-oil content pulp storage container (DPCE) for delivery to the pulp processing unit for the production of products for the food industry.

Also, in particular variation of the laboratory of the invention, the container may be of varying length (depending on the processing capacity), from the three meters to the maximum allowed for road transport, wherein in these variants it is possible to install more than one hydraulic presses (YP) as well as more than four tanks of oil and liquid residues (mainly in the case of fruits with oily peel).

Finally, in a particular variation of the laboratory of the invention, it is possible to design the hydraulic press (YP) in such a way that the stainless steel compression cylinder (perforated or slotted) is replaced by specially made microfiltration sacks. In this way the fruits will be inserted into the sacks and without being subsequently inserted into a compression cylinder, they will be placed in a suitably formed base of the press and will be compressed directly from the end plate of the hydraulic piston.

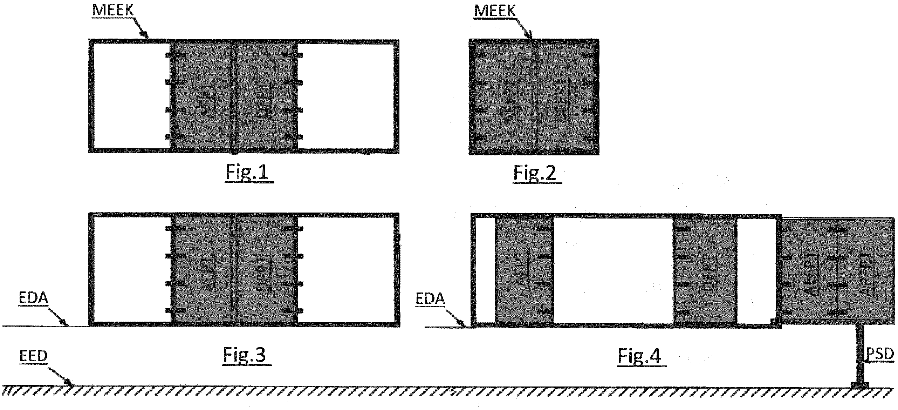

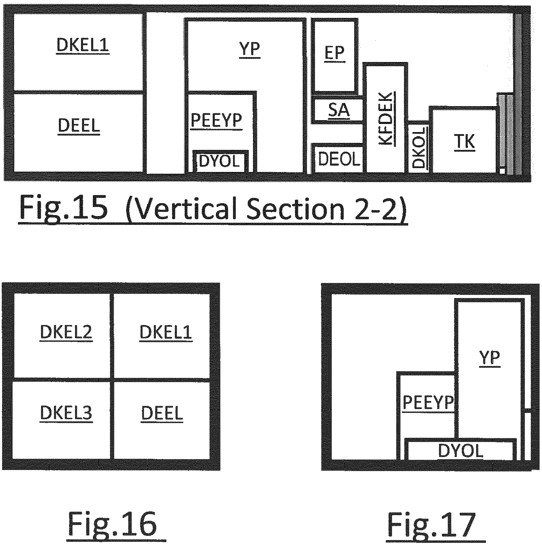

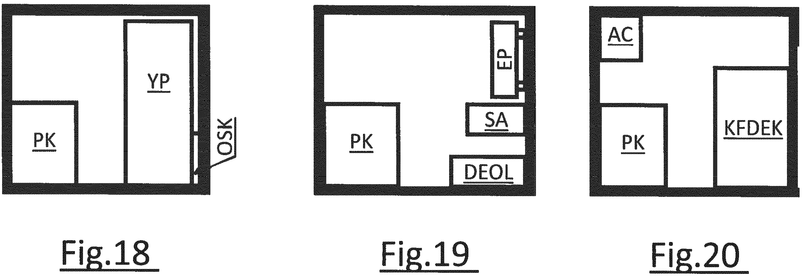

The understanding of the invention will be made possible through the presented indicative plans of front/top &side views and sections (Fig. 1 to Fig. 38) as well as the production diagrams (Fig. 39 and Fig. 40).
The coding of the Equipment, Machinery and other components constituting the movable laboratory, as used in Figures 1 to 40, is as follows:
(MEEK): Metal container.
(AFPT): Left side door leaf.
(DFPT): Right side door leaf.
(AEFPT): Left rear door external leaf.
(DEFPT): Right rear door external leaf.
(APFPT): Left foldable rear door leaf.
(DPFPT): Left foldable rear door leaf (not shown in the drawings)
(ESFPD): Internal foldable floor panel (for rear door)
(EXFPD): External Foldable Floor Panel (for rear door)
(FPD): Foldable Floor Panels (for rear door)
(FPPD): Foldable Floor Panels (for side door)
(AFTG): Generator room left door leaf
(DFTG): Generator room right door leaf
(PSD): Foldable floor stand (foldable floors)
(AO1): Roof opening (for tanks)
(AO2): Roof opening (for hydraulic press)
(PT): Foldable tent (for rear door)
(PPT): Foldable tent (for side door)
(YP): Hydraulic press
(PEEYP): Platform for input and output solid organic matter of hydraulic press
(KFDEK): Vertical centrifuge separator of liquid residues
(PK): Fruit washing machine
(MPK): Shifted fruit washing machine (during operation)
(TK): Fruit shredder
(MTK): Shifted fruit shredder
(AC): Storage area (Measuring & Quality Control Instruments, Tools & Documents)
(EP): Electrical Power Distribution Panel capable to be supplied by both an electric generator and a public electric network.
(EG): Electric generator.
(DYOL): Liquid Tank of hourly operation.
(DEOL): Oil tank of hourly operation.
(DKOL): Vertical separator liquid residues tank of hourly operation.
(DEEL): Daily oil tank.
(DKEL1): Daily liquid residues (and respectively for oil or juice) tank.
(DKEL2): Daily liquid residues (and respectively for oil or juice) tank.
(DKEL3): Daily liquid residues (and respectively for oil or juice) tank.
(DPCE): Tank for low oil content pulp.
(OSK): Pipe & cable routing (suitably formed channels behind the press).
(BE): Basic choice (for the process of the product or residue).
(EE): Alternative choice (for process of the product or residue).
(EK): Oily Fruit
(KA): Avocado Fruit.
(FES): Citrus peel.
(FY): Inert matter.
(NP): Washing water.
(CO): Land / soil.
(PCE): Low oil content pulp.
(EDE): Weekly oil tank.
(MEYY): Processing unit of liquid residue.
(MEPCE): Processing unit of low oil content pulp.
(PYF): Pharmaceutical industry raw material.
(PYBT): Food industry raw material.
(ZO): Fodder.
(KOY): Fruit kernel.
(CYM): Juice Production Unit
(EDA): Floor level.
(EED): Ground level.

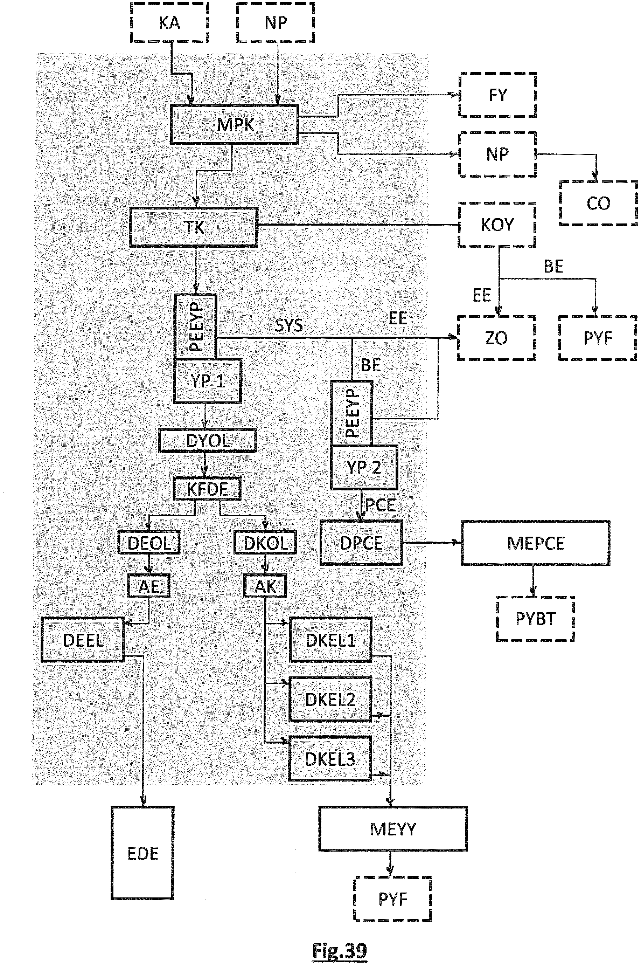

However, the invention is explained in more detail on the basis of a more preferred example of the operation of the movable laboratory concerning the oil extraction of avocados (where it is a fruit with oily flesh), in which an example reveals on one hand the possibility of producing high quality oils and, on the other hand the possibility of solving the problem regarding the management of solid and liquid residues produced during the oil extraction.
The drawings referring to avocado oil extraction are the arrangements / views & sections in the drawings in Fig. 1 to Fig. 20, the Production Diagram Fig. 39 and the views & sections for the variation with the Electric Generator in the drawings Fig. 21 to Fig. 30, for which we have following:

Fig. 1: Left side view of the metal container according to the invention (MEEK), showing the double-leafed side door with leaves (AFPT) & (DFPT), which is primarily used for extracting solid residues.

Fig. 2: Rear view of the metal container according to the invention, showing the double-leafed door with leaves (AEFPT) & (DEFPT), which is primarily used for the input of the raw material (avocado fruits KA for the example) as well as the extension of the door leaves (APFPT, APFPT, DPFPT & DPFPT) and the floor (ESFPD) & (EXFPD), to extend the active processing area of the laboratory.

Fig. 3: Similarly to Fig. 2, is shown the right-hand side view of the double-leaf door as it is closed during the truck transport phase, having the floor level (EDA) of the laboratory elevated relative to the ground plane (EED).

Fig. 4: Similarly to Fig. 3, is shown the side view of the container with the doors open during the operation of the laboratory as it will be raised from the ground. The drawing reveals the extension of the internal foldable leaf (APFPT) of the left side leaf AEFPT of the rear double-leaf door. The purpose of the special design of the rear door leaves is to attach a second modular inner leaf/panel, which constitutes an increase of the active processing area of the laboratory in cooperation with the extension of the internal modular floor panels (Fig. 10 to Fig. 12) on one hand and on the other hand with the extension of the fabric or plastic roof cover (PT) (Fig. 6).

Fig. 5: Bottom view of the roof of the metal container with the two openings (AO1) & (AO2) which serve to enable the placement and removal (repairs and planned maintenance phases) of the oil tanks (DEEL) and Liquid Waste tanks (DKOL1, DKOL2 & DKOL3) for opening (AO1) as well as the hydraulic press (YP) for opening (AO2).

Fig. 6: are shown the same with Fig. 5 and furthermore the foldable fabric or plastic tent (TP) which serves to cover the space formed by the extended inner and outer leaves of the rear double-leaf door (Fig. 3 & Fig. 4) as well as the foldable floor (Fig. 10 to Fig. 12).

Fig. 7: Vertical Section A-A (with reference to Fig. 5) of the container where are shown (a) the roof openings (AO1) and (AO2) and (b) the metal panels of the foldable floor (FPD).

Fig. 8 : Vertical Sections B-B and C-C (with reference to Fig. 6) of the container where (a) at Section B-B is shown the extension of the left foldable inner leaf (APFPT) and left outer leaf (AEFPT) of the rear double-sided door as well as the extension of the foldable panels (ESFPD) & (EXFPD) of the metal floor of the rear double-leaf door (b) the Section C-C will be similar to Section B-B with the difference that instead of (APFPT) and (AEFPT) it would be shown (DPFPT) and (DEFPT).

Fig. 9: Horizontal Section D-D (with reference to Fig. 7) of the closed metal container where are shown (a) the closed panels (FPD) of the foldable metal floor (b) the closed leaves (AFPT) & (DFPT) of the left double-leaf door and (c) the closed inner and outer leaves of the rear double-leaf door.

Fig. 10: Horizontal Section E-E (with reference to Fig. 8) of the container where are shown (a) the extended leaves (AFPD) & (DFPD) of the left double-leaf door (b) the extended panels (ESFPD) & (EXFPD) of the foldable floor and (c) the extended leaves (outer and foldable inner) of the rear double-leaf door.

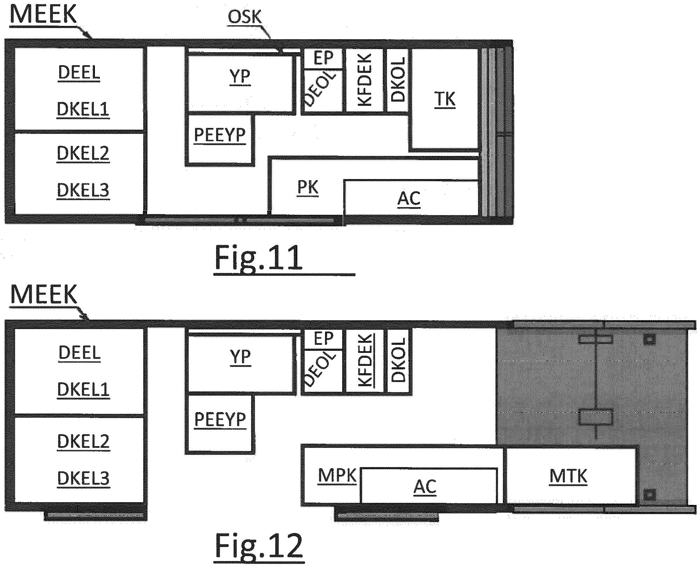

Fig. 11: Horizontal section of the interior of the Laboratory's Machinery and Equipment with closed doors, which constitutes the state of road transport by truck. During this phase, the Fruits Washing Machine (PK) and Fruit Shredder (TK) may be displaced from the position they will have during the operating phase.

Fig. 12: Horizontal section of the internal layout of the Machinery and Equipment of the Laboratory during the operation / fruit oil extraction phase, where the floor of the laboratory is elevated relative to the ground level. During this phase the sacks or fruit boxes are deposited on the foldable metal floor and from there they are led to the washing machine (PK) for removal of inert matter. After washing, the oily-flesh fruit is led to the Fruit Shredder (TK) for removal of kernel (KOY). From there, after the removal of the kernel the sliced fruit is loaded into the perforated stainless steel compression bucket/cylinder located on the (PEEYP) input/output platform of the solid material of the hydraulic press, from where it is led under the hydraulic press piston for direct compression. During compression the liquid fraction of the oily fruit is collected in the hourly tank (DYOL). From there the residue is removed from the perforated compression bucket/cylinder and removed from the laboratory via the double-leaf door. The liquid product of the compression is led to the oil/liquid residue separator (KFDEK). During the separation phase, the oil and the liquid residue are led to the hourly tanks (DEOL) and (DKOL), respectively. From the hourly tanks using pumps (AE & AK) the oil and liquid residues are led to the daily tanks (DEEL / DKEL1 / DKEL2 & DKEL3) respectively. The Electrical Power Distribution Panel will be constructed in such a way that it will carry a double power supply switch from public electric network (PPC) and electric generator, for the case where there is a PPC supply available in the field or at the fruit harvesting location.

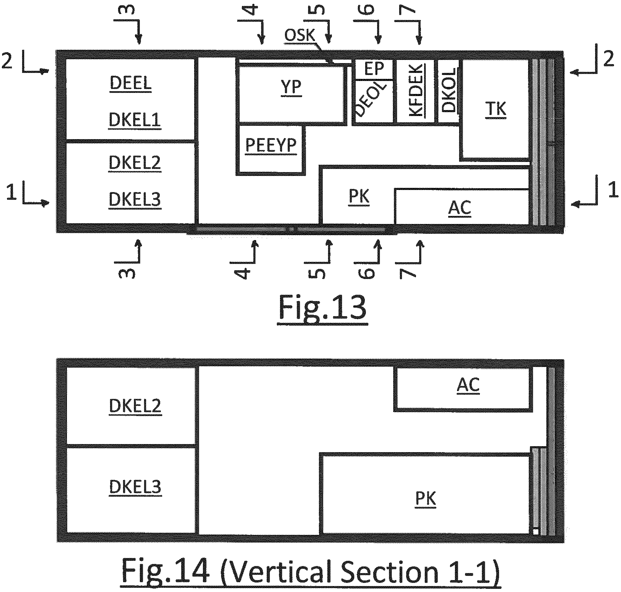

Fig. 13: Section Numbers on the Machinery and Equipment layout shown in Fig. 11.

Fig. 14 to Fig. 20: vertical and horizontal sections 1-1 to 7-7 (with reference to Fig. 13) on the assembly of the Machinery and Equipment of the laboratory during the road transport phase.

Fig. 21 to Fig. 30: show a variation of the Basic Machinery and Equipment arrangement of the invention, whereby is sacrificed the capacity of the liquid residues storage tanks, giving the laboratory the opportunity to have in its equipment (housed within the container) also the necessary electrical generator (EG). This, since the basic configuration of the invention has been considered, that the necessary electrical generator will be transported by road from a different vehicle (loaded or trailer) or from the same vehicle that carries the movable Laboratory but out of it.

Fig. 39: constitutes the production diagram of the avocado (fruits with oily flesh) oil extraction process presented above (analysis for Fig. 12), in which the environmental advantages of the present invention are evident where (a) we have the possibility of returning the solid residue to the field as a fertilizer (due to the low moisture content) (b) we have the ability to utilize the solid residue for the production of low oil content pulps (PCE) and to store them in a specially fabricated pulp storage tank (DPCE) for their transport to pulp processing units (MEPCE) (c) where we have the disposal of the washing water directly in the field for watering (rather than its disposal in the Municipal Drainage System) or its mixing with other liquid waste / residues and their disposal directly to the field (d) we have the possibility of storing liquid residues in specially fabricated tanks to recover the valuable phenolic components and (e) we have the ability of direct pressing of the fruits with oily flesh (after their washing) without preceding crushing and malaxation of them that happens with the current methods of fruit oil extraction. Also it is possible for the solid residues from oil extraction (SYS) of fruits with oily flesh, to be compressed further into several phases so to produce second or of higher grade cold pressed oils. Again, it is possible for the solid residues of the higher cold press grade to be pulped during the above process.

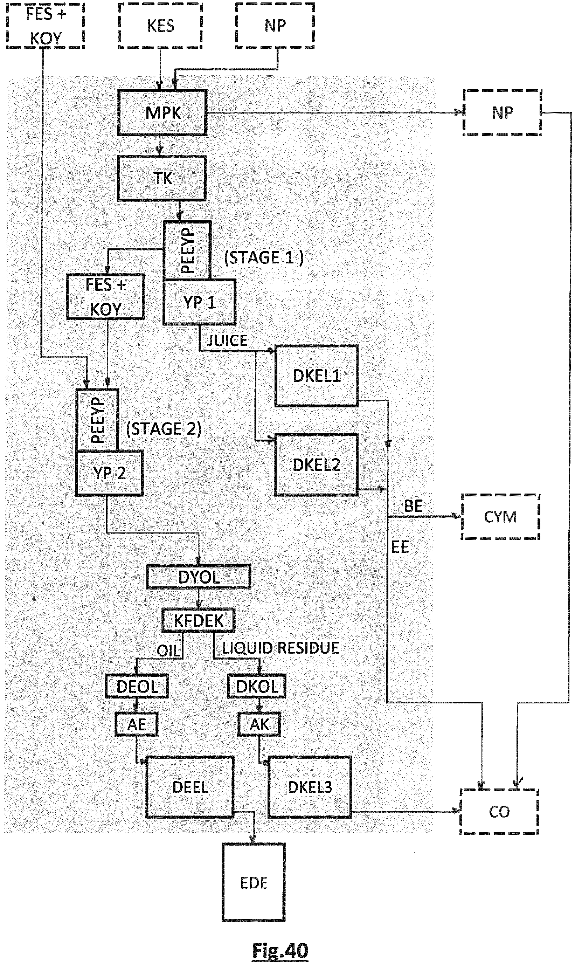

Fig. 40: constitutes the oil extraction diagram from fruits with oily peel, where for the understanding of the method is presented the oil extraction process of citrus fruits (KES) using the same machinery arrangement as that shown in the drawings in Fig. 11 to Fig. 30. The difference of oil extraction from citrus fruits, which are typical example of fruits with oily peel, is that (a) no removal of the kernel occurs in the fruit shredder and (b) after slicing the fruits, follow two compression processes. During the first compression process, which is carried out at low compression pressure, most of the liquids contained in the flesh (that constitute the fruit juice) are removed. This juice is stored in the liquid residues tanks to be selectively transported as a basic option (if it is not discarded on the soil after mixing with the washing water) in juicing units. During the second compression phase, or the first when citrus peel is available from juicing units (i.e. when the laboratory is installed in a juicing plant), the fruit oil extraction phase takes place with strong compression of the peel (solid product of the first compression) of the citrus fruit. For the rest, the citrus oil extraction process is similar to the avocado oil extraction process with the possibility of disposing of solid and liquid waste in the fruits production field. In the case where the installation of the movable laboratory is arranged in specially designated fruit dumps, then all of the liquid residues can be disposed of in the dump site. It is obvious the advantage of installing the laboratory in the dump, where the worthlessly discarded fruits (those that have just been dumped in the dump) are a valuable raw material for the production of top quality vegetable oils.

## Claims

1. Complete, by road movable, fruit peel and flesh oil extraction laboratory by the method of hydraulic direct cold press, housed in an appropriately designed metal container (MEEK) (with roof openings AO1 & AO2, inner foldable door leaves APFPT & DPFPT, foldable tent (PT) and foldable floor ESFPD & EXFPD), and equipped with suitably arranged electrically powered and power assisted machinery (YP1/2, KFDEK, AE, AK, PK, TK), and liquid tanks (DEEL, DKEL1, ΔKHΛ2, DKEL3, DYOL, DEOL, DKOL) and low in oil pulp tank (DPCE) able to (a) be transported (self-moving or trailer) and installed in the production fields of processing raw material , in fruit dumps and fruit processing plants, (b) store the daily produced oils and liquid waste during the oil extraction processes (c) store the daily produced low-oil content pulp (d) store the daily produced fruit juice (e) use common machinery and common storage tanks for the oil extraction processes from fruits with oily peel and fruits with oily flesh and (f) require for its operation only the connection of its Electrical Board to an external electric generator (EG) or to a fixed /public electric network (PPC).

2. Oil extraction method from fruits with oily flesh and oily peel, in their production site, by which is given the ability (a) to face the problem of solid waste management of industrial and small scale oil production plants, by direct disposal of solid waste produced either in the soil as an organic fertilizer, or as fodder of animals living in the field, or as biomass (for covering thermal needs of farmers in the field), (b) to face the problem of disposing of Washing Water (NP) through its direct disposal into the field (CO) for the purpose of the watering, (c) to face the problem of managing the liquid products / residues under the direct storage capability of these products and their transport to phenolic recovery units, (d) to mix (under both the two oil extraction cases) the washing water (NP) with the other liquid residues after the oil extraction for spreading the mixture in the field of fruits production (e) to produce the highest quality of first cold-compressed oils as (e1) the malaxation phase of the flesh is circumvented and (e2) the total oil extraction time is reduced to a minimum from the fruits harvesting time till the oils storage time into the tanks and (e3) the temperature throughout the oil extraction process may be kept below 27 °C.

3. A complete road movable laboratory according to claim No. 1, specially designed according to Figures Fig. 21 to Fig. 30, with the partitioning made by the second side double-leaf door (AFTG) and the angular partition, which is **characterized by** the fact that it will be equipped with the required Electrical Generator (EG) according to Figures Fig. 41 to Fig. 50, in which case it will have autonomous power supply to serve its electrical power needs.

4. Oil extraction method according to claim No. 2, by which the solid residues (SYS) by the first direct cold press extraction process , can be compressed further in several phases for the production of second or higher grade cold pressed oils.

5. Oil extraction method according to claim No. 2, whereby the solid residues from oil extraction (SYS) of fruits with oily flesh, may be further processed for the production of low oil content pulps (PCE), suitable for the food industry.
